# EUROPEAN PATENT SPECIFICATION

(11) **EP 4 564 215 B1**
(45) Date of publication and mention of the grant of the patent: **15.10.2025**
(21) Application number: 23212994.0
(22) Date of filing: 29.11.2023
(51) Int. Cl.: G06F 21/64, H04L 9/32, H04N 21/2368, H04N 21/2389, H04N 21/8358

(54) **METHOD AND SYSTEM FOR DIGITALLY SIGNING AUDIO AND VIDEO DATA**
VERFAHREN UND SYSTEM ZUR DIGITALEN SIGNIERUNG VON AUDIO- UND VIDEODATEN
PROCÉDÉ ET SYSTÈME DE SIGNATURE NUMÉRIQUE DE DONNÉES AUDIO ET VIDÉO

(43) Date of publication of application: 04.06.2025
(73) Proprietor: Axis AB, 223 69 Lund (SE)
(72) Inventor: Völcker, Björn, 223 69 LUND (SE); LEXFORS, Linus, 223 69 LUND (SE); Holmström, Caroline, 223 69 Lund (SE); NILSSON, Hannes, 223 69 LUND (SE)
(74) Representative: AWA Sweden AB

(56) References cited:
- EP-A1- 3 989 588
- US-A1- 2023 188 732

## Description

### Technical field

The present invention relates to the field of authentication of audio data and video data, and more particularly to safeguarding that audio data and video data have not been tampered with after they were captured.

### Background

Cameras capturing video are widely used for surveillance. Such surveillance or monitoring is often conducted in the interest of security but may also be conducted for, e.g., safety or industrial process control. In some scenarios, it is useful to capture not only images but also sound. Standalone microphones may be used for capturing sound. However, as a practical solution, many surveillance cameras incorporate one or more microphones. In this way, one and the same device can be used for monitoring a scene.

If an incident, such as a crime, occurs in the monitored scene, video data and audio data captured by the surveillance camera may be useful for investigating and proving what happened. In such a situation, it is important to ensure that neither video data nor audio data have been tampered with after they were captured by the image sensor and microphone of the camera. One way of proving that video data or audio data have not been tampered with is to apply a digital signature to the data. By signing the video data and audio data in the camera, it is later possible to authenticate the data, such that it can be ensured that no one has tampered with the data after it was transmitted from the camera. There are also systems in which digital signatures are applied, e.g., in an evidence management system to which the data is transmitted from the camera. In such systems, the digital signatures can be used for proving that the data has not been tampered with after entry into the system.

Digital signature schemes for video data and audio data are known. Still, when video and audio from one and the same monitored or captured scene are to be used as evidence, it may not suffice to show that the video data and audio data each are authentic in isolation. **It** may also be necessary to show that the video data and audio data were actually captured in one and the same location at the same time. Some systems deal with this by relying on timestamps in the video data and the audio data. **If** clocks of cameras and other device in a surveillance or monitoring system are synchronised, and the timestamp of a video frame and the timestamp of an audio frame are equal, then the video frame and the audio frame can be expected to have been captured at the same time. However, it is generally possible for a user of a camera or a surveillance system to adjust the clocks of cameras and other devices in the surveillance system. **In** this way, it could be possible to forge surveillance data by replacing an original audio sequence that was captured at the same time as a video sequence with another audio sequence captured at another time, but after fraudulently resetting the clock. There is thus still a need for convenient and secure methods of digitally signing video data and audio data in a way that makes it possible to show that the video data and audio data are authentic and originate from one and the same captured scene and were captured simultaneously.

EP3989588 A1 discloses methods for protecting content comprising both video and audio from tampering attempts by generating fingerprints for the video frames and the audio frames and then generating a joint fingerprint from these two sets of fingerprints, thereby cryptographically binding the video and audio streams together.

### Summary of the invention

**It** is an object of the present invention to provide a method by which a video sequence and an audio sequence captured at the same time, such that they represent one and the same captured scene, can be authenticated. Another object is to provide a method of digitally signing a video sequence and an audio sequence that can be applied on data streams from a camera without the need to encapsulate the video data and audio data in a file or container. **It** is also an object of the present invention to provide a system which enables authentication of a video sequence and an audio sequence capturing a monitored scene at the same time.

According to a first aspect, these and other objects are achieved, in full or at least in part, by a method according to claim 1. Thus, this is achieved by a method of digitally signing a video sequence and an audio sequence, the audio sequence and the video sequence having been captured at the same time such that they represent one and the same captured scene, the video sequence comprising successive video portions and the audio sequence comprising successive audio portions. The method comprises generating a first video digest by applying a digest algorithm to a first video portion of the video sequence, generating a first audio digest by applying a digest algorithm to a first audio portion of the audio sequence, generating a first video signature by digitally signing the first video digest, generating a first audio signature by digitally signing the first audio digest, inserting the first video signature in a first target audio portion of the audio sequence, inserting the first audio signature in a first target video portion of the video sequence, generating a second video digest by applying a digest algorithm to the first target video portion including the first audio signature, generating a second audio digest by applying a digest algorithm to the first target audio portion including the first video signature, generating a second video signature by digitally signing the second video digest, and generating a second audio signature by digitally signing the second audio digest. In this manner, the video sequence and the audio sequence are linked together. In order to authenticate the video sequence, the audio sequence is necessary and vice versa. Should, for instance, the audio sequence have been replaced after capture, to give the impression that people in the video sequence are saying something else than they actually did, an attempt to validate the audio signature included in the video sequence will fail. Such authentication failure may be due to deliberate tampering of the video or audio, but it may also be caused by transmission errors. Thus, a successful authentication will show that the video sequence and audio sequence are authentic, but a failed authentication will only show that something has happened after the video sequence and audio sequence were captured, it will not show whether the video and/or audio were wilfully tampered with or if there was an accidental change of the video and/or audio.

It should here be noted that the video signatures and the audio signatures need not be generated synchronously. A video signature may, for instance be generated for each group of pictures (GOP for short). The time duration of a GOP will depend on the frame rate of the image sensor and on the GOP length used for encoding the video data. As an example, at a frame rate of 30 frames per second and a GOP length of 62, a video signature of a GOP would be generated approximately once every two seconds. The audio sequence may be signed more or less often than the video sequence. As an example, if an audio frame or packet is produced every 10 ms and an audio signature is generated for a group of 100 audio frames, an audio signature would be generated once every second. When a video signature has been generated, it is inserted in a target audio portion of the audio sequence. This target audio portion may be an audio portion that is currently being captured and encoded when the video signature has been generated or it may be an upcoming audio portion, the capture and encoding of which has not yet started when the video signature has been generated. In the same way, when an audio signature has been generated, it is inserted in a target video portion, which may be a video portion that is currently being captured and encoded, or an upcoming video portion. If video signatures and audio signatures are being generated at the same rate, i.e. if the video portions and the audio portions for which signatures are generated are captured during equal lengths of time, each target video portion will after insertion contain one audio signature and each target audio portion will contain one video signature. If, on the other hand, audio signatures and video signatures are generated at different intervals, there will not be a one-to-one relationship of signatures between the video sequence and the audio sequence. If audio signatures are produced more often than video signatures, each target video portion may contain more than one audio signature, whereas each target audio portion would contain one video signature and there would be audio portions between target audio portions that would not contain any video signature. As will be appreciated by the skilled person, the situation would be reversed if video signatures are generated more often than audio signatures. It may in this context also be noted that, even in a scenario where video signatures and audio signatures are generated at the same rate, they need not be generated simultaneously. If video signatures and audio signatures are generated by one and the same signature circuit or processor, they will compete for computing resources and will have to be generated one after the other.

As used herein, a "target video portion" is a video portion in which an audio signature is inserted. As may be understood from the preceding discussion, there may be other video portions between target video portions if audio signatures are generated less frequently than once per video portion. In the same way, a "target audio portion" is an audio portion in which a video signature is inserted. There may be other audio portions between target audio portions if video signatures are generated less frequently than once per audio portion.

It should be noted that an audio sequence that captures the same monitored or captured scene as a video sequence may very well capture sounds originating outside the field of view of the camera that captures the video sequence. A microphone arranged in or near the camera may, for instance, capture voices of people within, as well as just outside the field of view of the camera or the sound of a window being smashed in front of, above, or behind the camera. Such sounds would all be considered as belonging to the same monitored or captured scene as the one within the field of view of the camera.

Variants of the method are defined in the dependent claims.

In some variants, the method further comprises inserting the second video signature in a second target audio portion of the audio sequence, and inserting the second audio signature in a second target video portion of the video sequence. Hereby, the second target audio portion will contain the second video signature, which in turn will have been influenced by the first audio signature. Consequently, validation of the second video signature will confirm the link to the audio sequence and more precisely to the first audio portion. Similarly, the second target video portion will contain the second audio signature, which in turn has been influenced by the first video signature. Thereby, validation of the second audio signature will confirm the link to the video sequence, and more precisely to the first video portion.

The method may further comprise inserting the first video signature also in a video portion of the video sequence and inserting the first audio signature also in an audio portion of the audio sequence. This would make it possible to authenticate the first video portion even if the first target audio portion has been lost and it would make it possible to authenticate the first audio portion even if the first target video portion has been lost.

Similarly, the method may comprise inserting the second video signature also in a video portion of the video sequence and inserting the second audio signature also in an audio portion of the audio sequence, thereby making it possible to authenticate the second video portion in the absence of the second target audio portion and to authenticate the second audio portion in the absence of the second target video portion. This would make the authentication procedure more robust to packet losses in transmission or to pruning of data storage. For instance, if transmission bandwidth or storage capacity is scarce, it may be decided to transmit only the generally less bit consuming audio sequence and to dispense with transmitting the video sequence. As will be appreciated by the skilled person, even in a situation where only video data or only audio data is transmitted, the presence of audio signatures in the video sequence or video signatures in the audio sequence will still make it possible to show that the video sequence was linked to an audio sequence at capture or that the audio sequence was linked to a video sequence when captured.

The digest algorithm may be a hash function. Hashing data is a well-known and practical way of creating a digest.

Each video portion may be a group of pictures, also referred to as a GOP.

Each audio portion may be a group of audio packets or audio frames.

In the video sequence, each audio signature may be inserted in a respective SEI message or Open Bitstream Unit of the video sequence. SEI messages are available in h.26X coding standards and may also be referred to as SEI frames or SEI NAL units. Specific SEI NAL units of type user data unregistered may be used for the insertion of signatures. Open Bitstream Units are available in the AV1 coding standard and may also be referred to as OBUs or Metadata OBUs.

In the audio sequence, each video signature is inserted in a respective data stream element or header of the audio sequence.

**In** some variants, the video sequence and the audio sequence have been captured by a single device comprising an image sensor and a microphone. This is a practical and efficient way of capturing video data and audio data in a monitored scene. **If** the image sensor and the microphone are incorporated in one and the same device, being able to show that the video sequence and the audio sequence were captured by the same device also makes it possible to show that they captured the same scene.

According to a second aspect, the above-mentioned objects are achieved, in full or at least in part, by means of a digital signature system according to claim 11. Thus, this is achieved by means of a digital signature system for digitally signing a video sequence and an audio sequence, the audio sequence and the video sequence having been captured at the same time such that they represent one and the same captured scene, the system comprising circuitry configured to perform a video input function arranged to receive a video sequence, the video sequence comprising successive video portions, an audio input function arranged to receive an audio sequence, the audio sequence comprising successive audio portions, a video digest function arranged to apply a digest algorithm to video portions of the video sequence, thereby generating video digests, an audio digest function arranged to apply a digest algorithm to audio portions of the audio sequence, thereby generating audio digests, a signature function arranged to generate video signatures by digitally signing video digests and to generate audio signatures by digitally signing audio digests, a video signature insertion function arranged to insert video signatures in the audio sequence, and an audio signature insertion function arranged to insert audio signatures in the video sequence, wherein the video digest function is arranged to generate a first video digest by applying a digest algorithm to a first video portion of the video sequence, the audio digest function is arranged to generate a first audio digest by applying a digest algorithm to a first audio portion of the audio sequence, the signature function is arranged to generate a first video signature by digitally signing the first video digest and to generate a first audio signature by digitally signing the first audio digest, the video signature insertion function is arranged to insert the first video signature in a first target audio portion of the audio sequence, the audio signature insertion function is arranged to insert the first audio signature in a first target video portion of the video sequence, the video digest function is arranged to generate a second video digest by applying a digest algorithm to the first target video portion including the first audio signature, the audio digest function is arranged to generate a second audio digest by applying a digest algorithm to the first target audio portion including the first video signature, the signature function is arranged to generate a second video signature by digitally signing the second video digest and to generate a second audio signature by digitally signing the second audio digest. Using such a system, it is possible to determine if a video sequence and an audio sequence capturing the same scene are authentic. The ability to insert audio signatures in the video sequence and to insert audio signatures in the audio sequence makes it possible to validate that the video sequence and the audio sequence were indeed captured simultaneously and in the same scene.

Embodiments of the digital signature system are defined in the dependent claims.

The digital signature system of the second aspect may generally be embodied in the same ways as the method of the first aspect, with accompanying advantages.

According to a third aspect, the above-mentioned objects are achieved by means of a camera comprising an image sensor, a microphone, and a digital signature system according to the second aspect.

According to a fourth aspect, the above-mentioned objects are achieved by means of a computer-readable storage medium comprising instructions which, when executed by a device with processing capability, cause the device to carry out the method of the first aspect.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, a reference to "an object" or "the object" may include several objects, and the like. Furthermore, the word "comprising" does not exclude other elements or steps.

### Brief description of the drawings

The invention will now be described in more detail by way of example and with reference to the accompanying schematic drawings, in which:
Fig. 1 is a perspective view of a scene monitored by a camera incorporating a microphone,
Fig. 2 is an illustration of a video sequence and an audio sequence capturing the scene in Fig. 1,
Fig. 3 is an illustration of how video signatures are inserted in an audio sequence and how audio signatures are inserted in a video sequence,
Fig. 4 is a flowchart of a method of digitally signing a video sequence and an audio sequence, such as the ones shown in Fig. 2,
Fig. 5 is a flowchart showing steps that may follow after the steps shown in Fig. 4,
Fig. 6 is a box diagram of a system for digitally signing a video sequence and an audio sequence, and
Fig. 7 is a box diagram of a camera incorporating a digital signature system.

### Detailed description of embodiments

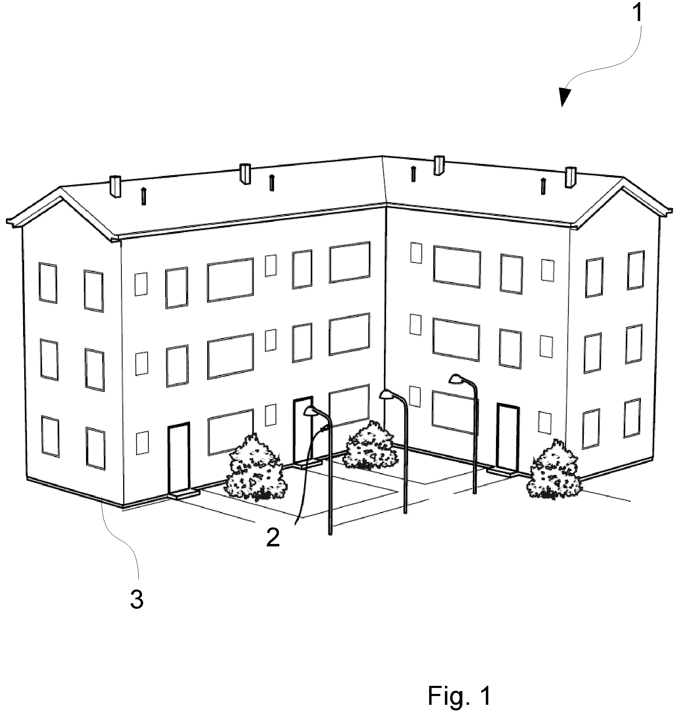

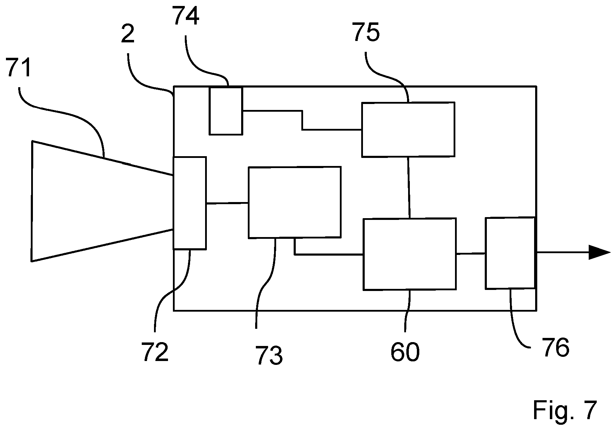

Fig. 1 is an illustration of a scene 1, which is monitored using a camera 2 arranged on a lighting post. As will be discussed further below with reference to Fig. 7, the camera 2 comprises an image sensor (not shown in Fig. 1) and a microphone (not shown in Fig. 1). In the example shown in Fig. 1, the camera 2 is directed at a door of a building 3. Objects in the space between the camera 2 and the building can be captured by the image sensor of the camera 2. Additionally, the microphone in the camera 2 can capture sounds around the camera 2. The microphone may generally have a wider range than just the field of view of the camera 2. For instance, the microphone may be able to capture sounds originating behind the camera or on the other side of the building 3.

Video sequences and audio sequences captured by the camera 2 may be useful as evidence if a crime is committed in the monitored scene 1. In some instances, video may suffice to ascertain what happened, e.g., for identifying who broke into the building through a window. In other instances, it may be necessary to also hear the sounds from the scene at the time of the crime, such as when a person has been assaulted and the accused perpetrator claims to have been acting in self-defence because the assault victim was verbally threatening. For a video sequence and an audio sequence to be useful in combination as evidence, it may be necessary to prove that they were indeed captured simultaneously in the same scene, or even by the same device. It may, therefore, not be enough to authenticate the video sequence and the audio sequence each in isolation to show that they have not been tampered with after they were captured. It may also be necessary to authenticate that they are indeed associated.

According to embodiments of the invention, video signatures may be generated for the video sequence and audio signatures may be generated for the audio sequence in ways similar to what would be done when digitally signing video data and audio data separately. In order to also be able to authenticate that the video sequence and the audio sequence belong together, the video signatures are included in the audio sequence and the audio signatures are included in the video sequence. Furthermore, when a video signature is generated, it should include data from a preceding audio signature, and when an audio signature is generated, it should include data from a preceding video signature. In this way, authentication of a video signature will fail not only if the video sequence has been tampered with but also if the audio sequence has been tampered with, and vice versa. For authentication of a video signature to succeed, both the video data and the audio data have to be intact. In the same way, for authentication of an audio signature, both the audio data and the video data have to be intact. If the video sequence and the audio sequence are in fact each authentic, but they were combined sometime after capture, such that the video sequence and the audio sequence were not captured simultaneously in the same scene, authentication will fail.

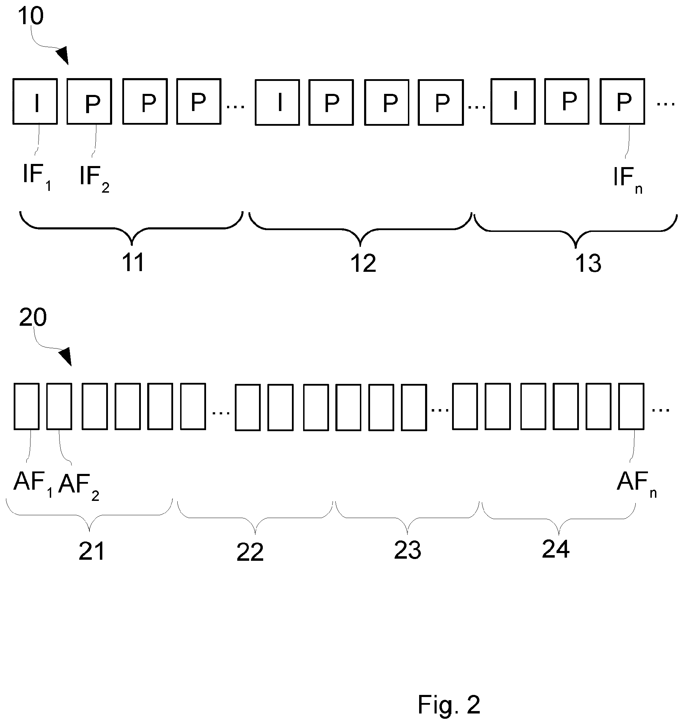

Fig. 2 illustrates a video sequence 10 and an audio sequence 20. The video sequence is made up of a succession of encoded image frames IF₁, IF₂ ... IFₙ. The image frames are arranged in groups of pictures, or GOPs for short. Each GOP starts with an intracoded image frame, also referred to as an I-frame, followed by a number of intercoded image frames. The intercoded image frames may be forward predicted frames, also referred to as P-frames, or bidirectionally predicted frames, also referred to as B-frames.

The audio sequence 20 is made up of a succession of encoded audio frames or packets AF₁, AF₂, ... AFₙ. The audio sequence does not have the same kind of hierarchical structure of frames as the video sequence, with key frames (intracoded frames) and delta frames (intercoded frames) and therefore does not have the same kind of inherent grouping. However, for the purposes of the inventive digital signature scheme, the audio sequence will also be divided into groups of audio frames. It may be worth mentioning that the video portions and audio portions for signing could be arbitrarily small, such as a single image frame or a single audio sample. However, in the interests of bitrate efficiency and computing efficiency, it will generally be preferable to sign several image frames or audio frames at a time.

In order to enable authentication of the video sequence and the audio sequence, as well as of the connection between the video sequence and the audio sequence, digital signatures are generated. Each digital signature is generated for a portion of the respective sequence. In this example, for the video sequence, a video signature is generated for a video portion in the form of a GOP, and an audio signature is generated for an audio portion of the audio sequence in the form of a group of audio frames.

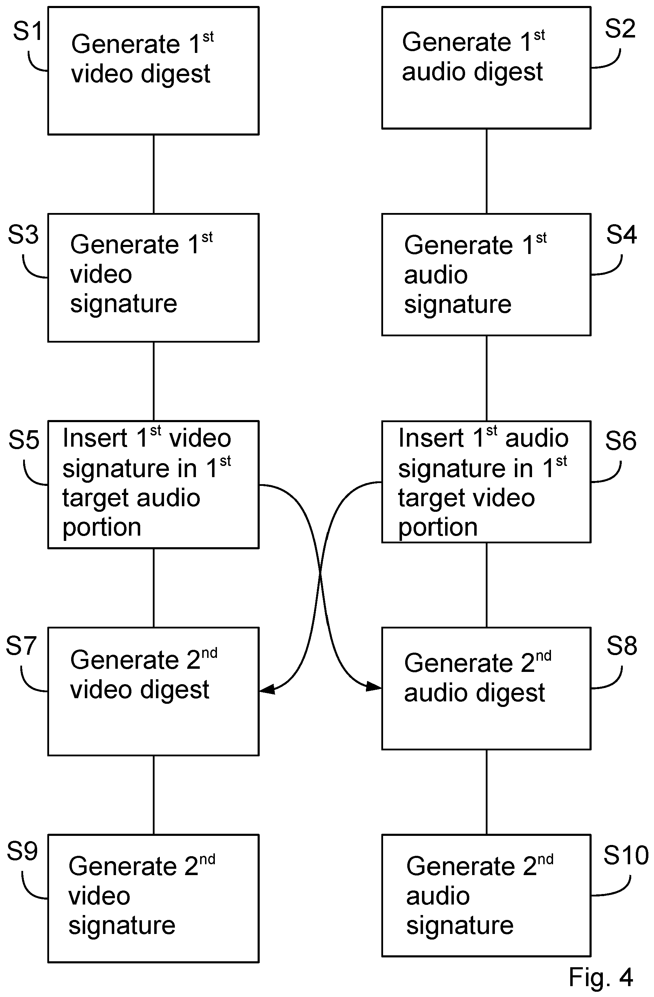

With reference to the flowchart in Fig. 4, an example of a method of digitally signing the video sequence and the audio sequence will now be described.

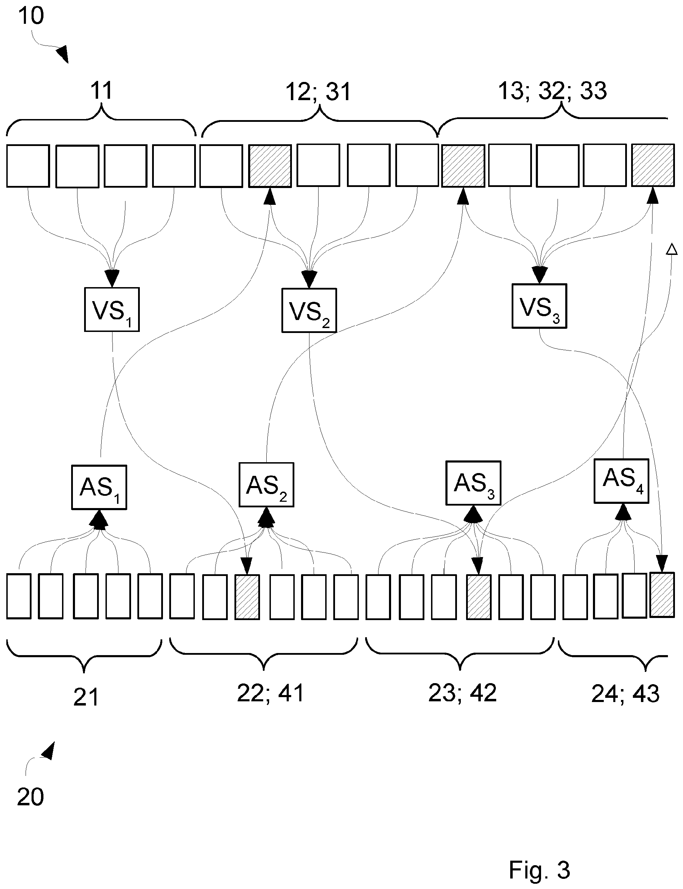

As a basis for a first video signature VS₁, a first video digest is generated by applying a digest algorithm to a first video portion 11, such as shown in Fig. 3. In this example, the digest is a hash. In the following, the video digest will therefore be referred to as a video hash. Thus, a first video hash is generated by hashing the first video portion 11 (step S1). The first video signature VS₁ is generated by digitally signing the first video hash (step S3). It may be noted that, if this is the very first video signature for the video sequence, and it is generated before any audio signature has been inserted into the video sequence, this first video signature will not be able to directly authenticate any link to the audio sequence, but it will still be useful for showing that the first video portion as such has not been tampered with. When the first video signature VS₁ has been generated, it is inserted into a first target audio portion of the audio sequence (S5). This insertion will be discussed in further detail below, with reference to Fig. 3.

In a similar fashion, as a basis for a first audio signature AS₁, a first audio digest is generated by applying a digest algorithm to a first audio portion 21 of the audio sequence 20. As for the video sequence, in this example, the digest is a hash. Thus, a first audio hash is generated by hashing the first audio portion 21 (step S2). The first audio signature AS₁ is generated by digitally signing the first audio hash (step S4). In the same way as for the video sequence, it may be noted that, if this is the very first audio signature for the audio sequence, and it is generated before any video signature has been inserted into the audio sequence, this first audio signature will not be able to authenticate any link to the video sequence, but it will still be useful for showing that the first audio portion as such has not been tampered with. When the first audio signature AS₁ has been generated, it is inserted into a first target video portion of the audio sequence (S5). This insertion will also be discussed in further detail below, with reference to Fig. 3.

A second video hash is generated by hashing the first target video portion (step S7). The first target video portion has been captured sometime after the first video portion 11 and is a video portion into which the first audio signature AS₁ has been inserted. The second video hash will therefore be a hash of a combination of video data and the first audio signature AS₁, thereby linking the video sequence 10 and the audio sequence 21 to each other. A second video signature VS₂ is generated by digitally signing the second video hash (step S9).

Further, a second audio hash is generated by hashing the first target audio portion (step S8). The first target audio portion has been captured sometime after the first audio portion 21 and is an audio portion into which the first video signature VS₁ has been inserted. The second audio hash will therefore be a hash of a combination of audio data and the first video signature VS₁, thereby linking the video sequence 10 and the audio sequence 21 to each other. A second audio signature AS₂ is generated by digitally signing the second audio hash (step S10).

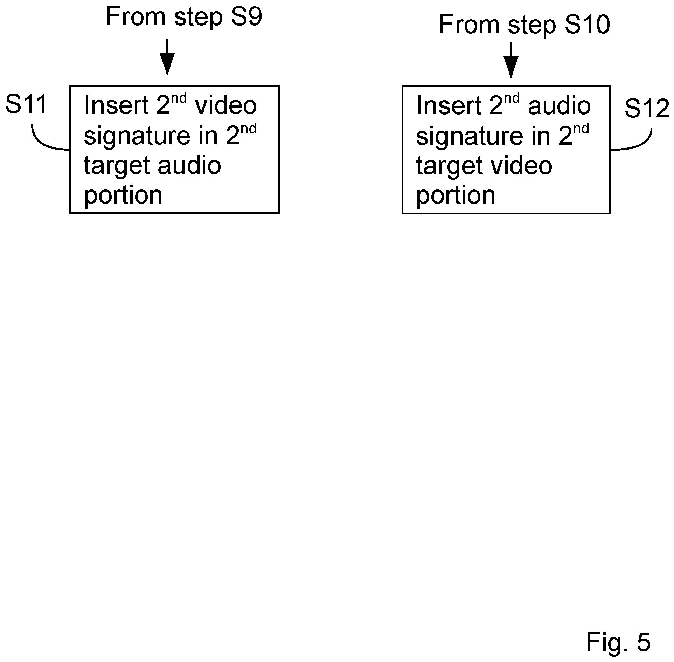

With brief reference to the flow chart in Fig. 5, before returning to Fig. 3, once the second video signature VS₂ has been generated, it may be inserted into a second target audio portion (step S11). Similarly, the second audio signature AS2 may be inserted into a second target video portion (step S12). Digital signing of the consecutive video portions of the video sequence 10 and consecutive audio portions of the audio sequence 20 may then continue in the same way until the end of the sequences. By such "cross fertilisation" of the video sequence and the audio sequence by the respective signatures, it will be possible to authenticate not only the video sequence and the audio sequence separately, but also their joint origin.

The insertion of video signatures in the audio sequence and of audio signatures in the video sequence will now be explained with reference to Fig. 3. Once again, a video sequence 10 and an audio sequence 20 are shown. As discussed above, the image frames are grouped into GOPs and the audio frames or audio packets are similarly grouped into groups of audio frames or audio packets. It should be noted that the illustration in Fig. 3 is highly schematic and that the groups will in practice generally be comprised of a lot more frames.

As described above, a first video signature VS₁ is generated for the first video portion 11. This first video signature VS₁ is inserted into a first target audio portion 41 of the audio sequence 20, which in this case happens to coincide with the second audio portion 22. The position in the audio sequence 20 where the first video signature VS₁ is inserted is indicated with hatching. Depending on how often video signatures are generated compared to how long the audio portions are, it may be that the first target audio portion 41 is an earlier or later audio portion than the second audio portion 22. Thus, the first target audio portion could be the first audio portion, the second audio portion, or a later audio portion. A second video signature VS₂ is generated for the second video portion 12 and this second video signature VS₂ is inserted in a second target audio portion 42. In the example shown, the second target audio portion 42 coincides with the third audio portion 23, but as just explained, this will depend on the relationship between how often video signatures are generated and how long the audio portions are. In the same manner, a third video signature VS₃ is generated for the third video portion 13. The third video signature VS₃ is inserted in a third target audio portion 43, which in the example shown is the fourth audio portion 24.

Looking at the audio sequence 20, the same principle is followed. A first audio signature AS₁ is generated for the first audio portion 21. The first audio signature AS₁ is inserted in a first target video portion 31. In the example shown, the first target video portion is the second video portion, but as discussed for the video signatures, this will depend on how often audio signatures are generated compared to how long the video portions are. A second audio signature AS₂ is generated for the second audio portion and is inserted in a second target video portion 32, which in this example is the third video portion 13. A third audio signature AS₃ is generated for the third audio portion 23. The third audio signature AS₃ is inserted in a third target video portion 33. In the example shown, the third target video portion 33 happens to be the same as the second target video portion 32, i.e., the third video portion 13. Thus, the third video portion will get two audio signatures AS₂, AS₃ inserted into it. Continuing with the fourth audio portion, of which the full length is not shown in Fig. 3, a fourth audio signature AS₄ is generated and inserted in a fourth target video portion. However, this fourth target video portion is not shown in Fig. 3.

In the video sequence 10, the audio signatures ASₙ may be inserted in already available elements in the video compression format. For instance, if the video sequence is encoded using h.264 or another h.26X encoding format, the audio signatures may be inserted in a designated type of SEI messages, sometimes referred to as SEI frames or SEI NAL units. Other video compression formats offer corresponding elements. As an example, if the video sequence is encoded using AV1, the audio signatures may be inserted in a designated type of Open Bitstream Units, also referred to as OBUs or Metadata OBUs.

Similarly, in the audio sequence 20, the video signatures VSₙ may be inserted in suitable existing elements in the audio coding format. For instance, if the audio sequence is encoded using AAC, the video signatures may be inserted in data stream elements, or DSEs for short, and in the PCM audio coding format, the video signatures may be inserted in headers of WAV containers in which the audio data is encapsulated. Other audio coding formats offer similar possibilities.

The video signatures may be generated by cryptographic operations, e.g., in line with the method described in applicant's European patent application No. 4164230 and the audio signatures may be inserted in SEI frames or corresponding elements of the video sequence as described in applicant's European patent application No. 4192018. The audio signatures may be generated and inserted using the same principles as for the video signatures.

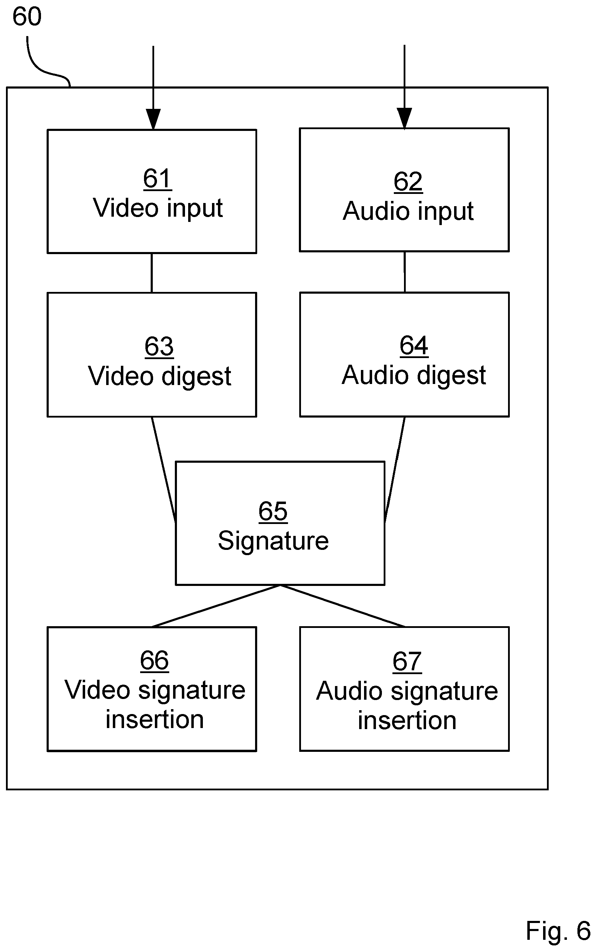

Fig. 6 is a simplified box diagram of a digital signature system 60 which could be used for performing the digital signing methods described above. The digital signature system 60 has a video input function 61 arranged to receive the video sequence 10 and an audio input function 62 arranged to receive the audio sequence 20. The digital signature system 60 further includes a video digest function 63 arranged to apply a digest algorithm to video portions of the video sequence, thereby generating video digests. As in the description above, in this example, the digest algorithm is a hash function, and the video digest function may therefore be referred to as a video hashing function 63. The digital signature system 60 also includes an audio digest function 64 arranged to apply a digest algorithm to audio portions of the audio sequence, thereby generating audio digests. As for the video digests, the audio digests are in this example hashes, and the audio digest function may therefore be referred to as an audio hashing function 64.

Furthermore, the digital signature system 60 includes a signature function 65 arranged to generate video signatures by digitally signing video digests or hashes and to generate audio signatures by digitally signing audio digests or hashes, a video signature insertion function 66 arranged to insert video signatures in the audio sequence, and an audio signature insertion function 67 arranged to insert audio signatures in the video sequence.

In line with what was described above in connection with Figs. 3-5, the video hashing digest function 63 is arranged to generate a first video hash by hashing a first video portion 11 of the video sequence 10, and the audio hashing function 64 is arranged to generate a first audio hash by hashing a first audio portion 21 of the audio sequence 20. The signature function 65 is arranged to generate a first video signature VS₁ by digitally signing the first video hash and to generate a first audio signature AS₁ by digitally signing the first audio hash. The video signature insertion function 66 is arranged to insert the first video signature VS₁ in a first target audio portion 41 of the audio sequence 20. The audio signature insertion function 67 is arranged to insert the first audio signature AS₁ in a first target video portion 31 of the video sequence 10. The video hashing function 63 is further arranged to generate a second video hash by hashing the first target video portion 31 including the first audio signature AS₁ and the audio hashing function is arranged to generate a second audio hash by hashing the first target audio portion 41 including the first video signature VS₁. The signature function 65 is arranged to generate a second video signature VS₂ by digitally signing the second video hash and to generate a second audio signature AS₁ by digitally signing the second audio hash.

In the same way as discussed in relation to Fig. 5, the video signature insertion function 66 may additionally be arranged to insert the second video signature VS₂ in a second target audio portion 42, and the audio signature insertion function 67 may additionally be arranged to insert the second audio signature AS₂ in a second target video portion 32.

The functions 61-67 of the digital signature system 60 may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. In the disclosure, the circuitry is hardware that carries out or is programmed to perform the recited functionality. The hardware may be any hardware disclosed herein or otherwise known which is programmed or configured to carry out the recited functionality.

In a pure hardware implementation, each of the functions may have corresponding circuitry which is dedicated and specifically designed to implement the function. The circuitry may be in the form of one or more integrated circuits, such as one or more application specific integrated circuits or one or more field-programmable gate arrays.

In an implementation which also includes software, the circuitry may include a processor. Processors are considered processing circuitry or circuitry as they include transistors and other circuitry therein. In this case, the circuitry may be seen as a combination of hardware and software, the software being used to configure the hardware and/or processor.

It is to be understood that it is also possible to have a combination of a hardware and a software implementation, meaning that some of the functions are implemented by dedicated circuitry and others in software, i.e., in the form of computer code which is executed by a processor.

In Fig. 7, a simplified box diagram of the camera 2 is shown. The camera 2 has a lens 71 and an image sensor 72 for capturing images of a monitored scene. The camera 2 further includes a video encoder 73 for encoding video data captured by the image sensor 72. In order to capture sounds in the scene, the camera 2 comprises a microphone 74. Further, the camera 2 includes an audio encoder 75 for encoding audio data captured by the microphone 74. Additionally, the camera 2 includes a digital signature system 60 such as the one shown in Fig. 6. A network interface 76 enables transmission of the encoded video data and audio data, including video signatures and audio signatures. As will be appreciated by the skilled person, the camera 2 may have additional components, but here, only those relevant to the description of the invention have been shown and discussed.

**In** order to make the method and system described above more resilient to transmission losses, the video signatures may be inserted also in the video sequence and the audio signatures may be inserted also in the audio sequence. When a video signature has been generated, it may in this scenario be inserted in the following video portion or otherwise the nearest video portion after the video signature has been generated. In the same way, when an audio signature has been generated, it may be inserted in the following audio portion or otherwise the nearest audio portion after the audio signature has been generated. In a situation where transmission bandwidth from the camera is low, it may be decided to transmit only video or only audio. In such case, it would not be possible to authenticate the transmitted sequence, unless the corresponding signature were inserted also in the sequence from which it stems. Thus, if only video is transmitted, no video signatures would be transmitted, unless they were also included in the video sequence. Analogously, if only audio is transmitted, no audio signatures would be transmitted, unless they were also included in the audio sequence. As a further adaptation, if it is decided to revert to "video only" transmission during a temporary bandwidth restriction, it would be possible to pause insertion of audio signatures into the video sequence during the period of "video only" transmission, thereby making it possible to authenticate the video sequence independently. This could, of course, be applied *mutatis mutandis* to an "audio only" transmission. During such a period of "video only" or "audio only" transmission, the non-transmitted sequence could be stored locally in the camera for later transmission when network conditions have improved. **It** should be noted that in such case, it would not be possible to safely authenticate the link between the video sequence and the audio sequence in case insertion of signatures in the "companion sequence" were paused during the "video only" or "audio only" transmission. It may be useful to insert metadata in the transmitted sequence indicating that transmission of the other sequence has been paused.

It will be appreciated that a person skilled in the art can modify the above described embodiments in many ways and still use the advantages of the invention as shown in the embodiments above. As an example, video signatures and audio signatures have been described as being generated for groups of pictures and groups of audio frames or audio packets. However, it would also be possible to generate signatures more or less frequently. For instance, a video signature could be generated for each image frame and an audio signature could be generated for each audio frame or audio packet. Still, it will generally be more bitrate efficient to generate a signature for a plurality of frames or packets. It will also be more computing resource efficient not to have to generate signatures too often.

Above, the video digests and audio digests have been described as being hashes of the video data and audio data, respectively. Other kinds of digests may also be useful, such as a list of hashes of the individual frames of a signed group of frames or packets.

The signature function may use one and the same secure element for generating video signatures and audio signatures. It would also be possible to use separate secure elements for signing the two different sequences. In such case, the link between them could be ensured by linking two secure elements in one and the same device to each other.

Although the image frames and audio frames or audio packets above have been described as being encoded, it will generally be possible to use the same digital signing concept for unencoded or raw data, as long as the signed data is not subsequently encoded. Encoding would more or less inevitably entail information loss that would make authentication fail, even if there has been no tampering or packet losses.

As noted above, the video sequence may be encoded using h.264, h.265 or another h.26x encoding standard, or using the AV1 encoding standard. In variants, other video encoding standards may be used, such as LCEVC or MJPEG.

As mentioned above, the audio sequence may be encoded using the AAC encoding standard or the PCM encoding standards. PCM encoded audio data may, as mentioned above, be packaged in WAV containers. In variants, generally any encoding standard capable of handling metadata may be used.

Thus, the invention should not be limited to the shown embodiments but should only be defined by the appended claims.

## Claims

1. A method of digitally signing a video sequence (10) and an audio sequence (20), the audio sequence and the video sequence having been captured at the same time such that they represent one and the same captured scene (1), the video sequence comprising successive video portions (11, 12, 13) and the audio sequence comprising successive audio portions (21, 22, 23, 24), the method comprising
generating (S1) a first video digest by applying a digest algorithm to a first video portion (11) of the video sequence,
generating (S2) a first audio digest by applying a digest algorithm to a first audio portion (21) of the audio sequence,
generating (S3) a first video signature (VS₁) by digitally signing the first video digest,
generating (S4) a first audio signature (AS₁) by digitally signing the first audio digest, the method **characterized in that** it further comprises:
inserting (S5) the first video signature (VS₁) in a first target audio portion (41) of the audio sequence (20),
inserting (S6) the first audio signature (AS₁) in a first target video portion (31) of the video sequence (10),
generating (S7) a second video digest by applying a digest algorithm to the first target video portion (31) including the first audio signature (AS₁),
generating (S8) a second audio digest by applying a digest algorithm to the first target audio portion (41) including the first video signature (VS₁),
generating (S9) a second video signature (VS₂) by digitally signing the second video digest, and
generating (S10) a second audio signature (AS₂) by digitally signing the second audio digest.

2. The method according to claim 1, further comprising:
inserting (S11) the second video signature (VS₂) in a second target audio portion (42) of the audio sequence (20), and
inserting (S12) the second audio signature (AS₂) in a second target video portion (32) of the video sequence.

3. The method according to claim 1 or 2, further comprising
inserting the first video signature (VS₁), also in a video portion of the video sequence (10), and
inserting the first audio signature (AS₁), also in an audio portion of the audio sequence (20).

4. The method according to claim 2 or claim 3 when dependent on claim 2, further comprising
inserting the second video signature (VS₂), also in a video portion of the video sequence (10), and
inserting the second audio signature (AS₂) also in an audio portion of the audio sequence (20).

5. The method according to any one of the preceding claims, wherein the digest algorithm is a hash function.

6. The method according to any one of the preceding claims, wherein each video portion is a group of pictures.

7. The method according to any one of the preceding claims, wherein each audio portion is an audio frame or audio packet.

8. The method according to any one of the preceding claims, wherein each audio signature is inserted in a respective SEI message or Open Bitstream Unit of the video sequence.

9. The method according to any one of the preceding claims, wherein each video signature is inserted in a respective data stream element or header of the audio sequence.

10. The method according to any one of the preceding claims, wherein the video sequence and the audio sequence have been captured by a single device (2) comprising an image sensor (72) and a microphone (74).

11. A digital signature system for digitally signing a video sequence (10) and an audio sequence (20), the audio sequence and the video sequence having been captured at the same time such that they represent one and the same captured scene (1), the system comprising circuitry configured to perform
a video input function (61) arranged to receive a video sequence (10), the video sequence comprising successive video portions,
an audio input function (62) arranged to receive an audio sequence (20), the audio sequence comprising successive audio portions,
a video digest function (63) arranged to apply a digest algorithm to video portions of the video sequence, thereby generating video digests,
an audio digest function (64) arranged to apply a digest algorithm to audio portions of the audio sequence, thereby generating audio digests,
a signature function (65) arranged to generate video signatures (VS₁, VS₂) by digitally signing video digests and to generate audio signatures (AS₁, AS₂) by digitally signing audio digests,
a video signature insertion function (66) arranged to insert video signatures in the audio sequence, and
an audio signature insertion function (67) arranged to insert audio signatures in the video sequence,
wherein
the video digest function (63) is arranged to generate a first video digest by applying a digest algorithm to a first video portion of the video sequence,
the audio digest function (64) is arranged to generate a first audio digest by applying a digest algorithm to a first audio portion of the audio sequence,
the signature function (65) is arranged to generate a first video signature (VS₁) by digitally signing the first video digest and to generate a first audio signature (AS₁) by digitally signing the first audio digest,
and **characterized in that**:
the video signature insertion function (66) is arranged to insert the first video signature (VS₁) in a first target audio portion (41) of the audio sequence,
the audio signature insertion function (67) is arranged to insert the first audio signature (AS₁) in a first target video portion (31) of the video sequence,
the video digest function (63) is arranged to generate a second video digest by applying a digest algorithm to the first target video portion including the first audio signature,
the audio digest function (64) is arranged to generate a second audio digest by applying a digest algorithm to the first target audio portion including the first video signature,
the signature function is arranged to generate a second video signature (VS₂) by digitally signing the second video digest and to generate a second audio signature (AS₂) by digitally signing the second audio digest.

12. The digital signature system according to claim 11,
wherein
the video signature insertion function is arranged to insert the second video signature (VS₂) in a second target audio portion (42) of the audio sequence, and
the audio signature insertion function is arranged to insert the second audio signature (AS₂) in a second target video portion (32) of the video sequence.

13. A video camera comprising an image sensor (72), a microphone (74), and a digital signature system (60) according to any one of claims 11-12.

14. A computer-readable storage medium comprising instructions which, when executed by a device with processing capability, cause the device to carry out the method of any one of claims 1-10.

## Patentansprüche

1. Verfahren zum digitalen Signieren einer Videosequenz (10) und einer Audiosequenz (20), wobei die Audiosequenz und die Videosequenz zur selben Zeit aufgenommen wurden, so dass sie ein und dieselbe aufgenommene Szenerie (1) repräsentieren, wobei die Videosequenz aufeinanderfolgende Videoanteile (11, 12, 13) umfasst und die Audiosequenz aufeinanderfolgende Audioanteile (21, 22, 23, 24) umfasst, das Verfahren umfasst hierbei
Erzeugen (S1) eines ersten Videoauszugs durch Anwenden eines Auszugsalgorithmus auf einen ersten Videoanteil (11) der Videosequenz,
Erzeugen (S2) eines ersten Audioauszugs durch Anwenden eines Auszugsalgorithmus auf einen ersten Audioanteil (21) der Audiosequenz,
Erzeugen (S3) einer ersten Videosignatur (VS1) durch digitales Signieren des ersten Videoauszugs,
Erzeugen (S4) einer ersten Audiosignatur (AS1) durch digitales Signieren des ersten Audioauszugs, wobei das Verfahren **dadurch gekennzeichnet ist, dass** es ferner Folgendes umfasst:
Einsetzen (S5) der ersten Videosignatur (VS1) in einen ersten Zielaudioanteil (41) der Audiosequenz (20),
Einsetzen (S6) der ersten Audiosignatur (AS1) in einen ersten Zielvideoanteil (31) der Videosequenz (10),
Erzeugen (S7) eines zweiten Videoauszugs durch Anwenden eines Auszugsalgorithmus auf den ersten Zielvideoanteil (31), der die erste Audiosignatur (AS1) beinhaltet,
Erzeugen (S8) eines zweiten Audioauszugs durch Anwenden eines Auszugsalgorithmus auf den ersten Zielaudioanteil (41), der die erste Videosignatur (VS1) beinhaltet,
Erzeugen (S9) einer zweiten Videosignatur (VS2) durch digitales Signieren des zweiten Videoauszugs, und
Erzeugen (S10) einer zweiten Audiosignatur (AS2) durch digitales Signieren des zweiten Audioauszugs.

2. Verfahren nach Anspruch 1, ferner umfassend:
Einsetzen (S11) der zweiten Videosignatur (VS2) in einen zweiten Zielaudioanteil (42) der Audiosequenz (20), und
Einsetzen (S12) der zweiten Audiosignatur (AS2) in einen zweiten Zielvideoanteil (32) der Videosequenz.

3. Verfahren nach Anspruch 1 oder **2,** ferner umfassend
Einsetzen der ersten Videosignatur (VS1) auch in einen Videoanteil der Videosequenz (10), und
Einsetzen der ersten Audiosignatur (AS1) auch in einen Audioanteil (41) der Audiosequenz (20).

4. Verfahren nach Anspruch 2 oder Anspruch 3, wenn abhängig von Anspruch **2,** ferner umfassend
Einsetzen der zweiten Videosignatur (VS2) auch in einen Videoanteil der Videosequenz (10), und
Einsetzen der zweiten Audiosignatur (AS2) auch in einen Audioanteil der Audiosequenz (20).

5. Verfahren nach einem der vorhergehenden Ansprüche, wobei der Auszugsalgorithmus eine Hash-Funktion ist.

6. Verfahren nach einem der vorhergehenden Ansprüche, wobei jeder Videoanteil eine Gruppe von Bilddarstellungen ist.

7. Verfahren nach einem der vorhergehenden Ansprüche, wobei jeder Audioanteil ein Audioframe oder ein Audiopaket ist.

8. Verfahren nach einem der vorhergehenden Ansprüche, wobei jede Audiosignatur in eine jeweilige SEI-Nachricht oder eine Open Bitstream Unit der Videosequenz eingesetzt wird.

9. Verfahren nach einem der vorhergehenden Ansprüche, wobei jede Videosignatur in ein jeweiliges Datenstromelement oder einen Header der Audiosequenz eingesetzt wird.

10. Verfahren nach einem der vorhergehenden Ansprüche, wobei die Videosequenz und die Audiosequenz durch eine einzige Vorrichtung (2) aufgenommen wurden, die einen Bildsensor (72) und ein Mikrofon (74) umfasst.

11. Digitales Signatursystem zum digitalen Signieren einer Videosequenz (10) und einer Audiosequenz (20), wobei die Audiosequenz und die Videosequenz zur selben Zeit aufgenommen wurden, so dass sie ein und dieselbe aufgenommene Szenerie (1) repräsentieren, wobei das System eine Schaltungsanordnung umfasst, die ausgelegt ist zum Durchführen
einer Videoeingabefunktion (61), eingerichtet zum Empfangen einer Videosequenz (10), wobei die Videosequenz aufeinanderfolgende Videoanteile umfasst,
einer Audioeingabefunktion (62), eingerichtet zum Empfangen einer Audiosequenz (20), wobei die Audiosequenz aufeinanderfolgende Audioanteile umfasst,
einer Videoauszugsfunktion (63), eingerichtet zum Anwenden eines Auszugsalgorithmus auf Videoanteile der Videosequenz, wodurch Videoauszüge erzeugt werden,
einer Audioauszugsfunktion (64), eingerichtet zum Anwenden eines Auszugsalgorithmus auf Audioanteile der Audiosequenz, wodurch Audioauszüge erzeugt werden,
einer Signaturfunktion (65), eingerichtet zum Erzeugen von Videosignaturen (VS1, VS2) durch digitales Signieren von Videoauszügen und Erzeugen von Audiosignaturen (AS1, AS2) durch digitales Signieren von Audioauszügen,
einer Videosignatureinsetzfunktion (66), eingerichtet zum Einsetzen von Videosignaturen in die Audiosequenz, und
einer Audiosignatureinsetzfunktion (67), eingerichtet zum Einsetzen von Audiosignaturen in die Videosequenz, wobei
die Videoauszugsfunktion (63) eingerichtet ist zum Erzeugen eines ersten Videoauszugs durch Anwenden eines Auszugsalgorithmus auf einen ersten Videoanteil der Videosequenz,
die Audioauszugsfunktion (64) eingerichtet ist zum Erzeugen eines ersten Audioauszugs durch Anwenden eines Auszugsalgorithmus auf einen ersten Audioanteil der Audiosequenz,
die Signaturfunktion (65) eingerichtet ist zum Erzeugen einer ersten Videosignatur (VS1) durch digitales Signieren des ersten Videoauszugs und Erzeugen einer ersten Audiosignatur (AS1) durch digitales Signieren des ersten Audioauszugs,
und **dadurch gekennzeichnet, dass**:
die Videosignatureinsetzfunktion (66) eingerichtet ist zum Einsetzen der ersten Videosignatur (VS1) in einen ersten Zielaudioanteil (41) der Audiosequenz,
die Audiosignatureinsetzfunktion (67) eingerichtet ist zum Einsetzen der ersten Audiosignatur (AS1) in einen ersten Zielvideoanteil (31) der Videosequenz,
die Videoauszugsfunktion (63) eingerichtet ist zum Erzeugen eines zweiten Videoauszugs durch Anwenden eines Auszugsalgorithmus auf den ersten Zielvideoanteil, der die erste Audiosignatur beinhaltet,
die Audioauszugsfunktion (64) eingerichtet ist zum Erzeugen eines zweiten Audioauszugs durch Anwenden eines Auszugsalgorithmus auf den ersten Zielaudioanteil, der die erste Videosignatur beinhaltet,
die Signaturfunktion eingerichtet ist zum Erzeugen einer zweiten Videosignatur (VS2) durch digitales Signieren des zweiten Videoauszugs und zum Erzeugen einer zweiten Audiosignatur (AS2) durch digitales Signieren des zweiten Audioauszugs.

12. Digitales Signatursystem nach Anspruch **11,** wobei
die Videosignatureinsetzfunktion eingerichtet ist zum Einsetzen der zweiten Videosignatur (VS2) in einen zweiten Zielaudioanteil (42) der Audiosequenz, und
die Audiosignatureinsetzfunktion eingerichtet ist zum Einsetzen der zweiten Audiosignatur (AS2) in einen zweiten Zielvideoanteil (32) der Videosequenz.

13. Videokamera, umfassend einen Bildsensor (72), ein Mikrofon (74) und
ein digitales Signatursystem (60) nach einem der Ansprüche 11 - 12.

14. Computerlesbares Speicherungsmedium, das Anweisungen umfasst, die bei Ausführung durch eine Vorrichtung mit Verarbeitungsfähigkeit die Vorrichtung veranlassen zum Ausführen des Verfahrens nach einem der Ansprüche 1 - 10.

## Revendications

1. Procédé de signature numérique d'une séquence vidéo (10) et d'une séquence audio (20), la séquence audio et la séquence vidéo ayant été capturées en même temps de sorte qu'elles représentent une et la même scène capturée (1), la séquence vidéo comprenant des parties vidéo successives (11, 12, 13) et la séquence audio comprenant des parties audio successives (21, 22, 23, 24), le procédé comprenant
la génération (S1) d'un premier condensé vidéo en appliquant un algorithme de condensé à une première partie vidéo (11) de la séquence vidéo,
la génération (S2) d'un premier condensé audio en appliquant un algorithme de condensé à une première partie audio (21) de la séquence audio,
la génération (S3) d'une première signature vidéo (VS₁) en signant numériquement le premier condensé vidéo,
la génération (S4) d'une première signature audio (AS₁) en signant numériquement le premier condensé audio, le procédé est **caractérisé en ce qu'**il comprend en outre :
l'insertion (S5) de la première signature vidéo (VS₁) dans une première partie audio cible (41) de la séquence audio (20),
l'insertion (S6) de la première signature audio (AS₁) dans une première partie vidéo cible (31) de la séquence vidéo (10),
la génération (S7) d'un second condensé vidéo en appliquant un algorithme de condensé à la première partie vidéo cible (31) comprenant la première signature audio (AS₁),
la génération (S8) d'un second condensé audio en appliquant un algorithme de condensé à la première partie audio cible (41) comprenant la première signature vidéo (VS₁),
la génération (S9) d'une seconde signature vidéo (VS₂) en signant numériquement le second condensé vidéo, et
la génération (S10) d'une seconde signature audio (AS₂) en signant numériquement le second condensé audio.

2. Procédé selon la revendication 1, comprenant en outre :
l'insertion (S11) de la seconde signature vidéo (VS₂) dans une seconde partie audio cible (42) de la séquence audio (20), et
l'insertion (S12) de la seconde signature audio (AS₂) dans une seconde partie vidéo cible (32) de la séquence vidéo.

3. Procédé selon la revendication 1 ou 2, comprenant en outre
l'insertion de la première signature vidéo(VS₁), également dans une partie vidéo de la séquence vidéo (10), et
l'insertion de la première signature audio (AS₁), également dans dans une partie audio de la séquence audio (20).

4. Procédé selon la revendication 2 ou la revendication 3 lorsqu'elle dépend de la revendication 2, comprenant en outre
l'insertion de la seconde signature vidéo (VS₂), également dans une partie vidéo de la séquence vidéo (10), et
l'insertion de la seconde signature audio (AS₂), également dans dans une partie audio de la séquence audio (20).

5. Procédé selon l'une quelconque des revendications précédentes, dans lequel l'algorithme de condensé est une fonction de hachage.

6. Procédé selon l'une quelconque des revendications précédentes, dans lequel chaque partie vidéo est un groupe d'images.

7. Procédé selon l'une quelconque des revendications précédentes, dans lequel chaque partie audio est une trame audio ou un paquet audio.

8. Procédé selon l'une quelconque des revendications précédentes, dans lequel chaque signature audio est insérée dans un message SEI respectif ou une unité de flux binaire ouvert de la séquence vidéo.

9. Procédé selon l'une quelconque des revendications précédentes, dans lequel chaque signature vidéo est insérée dans un élément de flux de données respectif ou un en-tête de la séquence audio.

10. Procédé selon l'une quelconque des revendications précédentes, dans lequel la séquence vidéo et la séquence audio ont été capturées par un seul dispositif (2) comprenant un capteur d'image (72) et un microphone (74).

11. Système de signature numérique pour signer numériquement une séquence vidéo (10) et une séquence audio (20), la séquence audio et la séquence vidéo ayant été capturées en même temps de sorte qu'elles représentent une et la même scène capturée (1),le système comprenant un circuit configuré pour exécuter
une fonction d'entrée vidéo (61) agencée pour recevoir une séquence vidéo (10), la séquence vidéo comprenant des parties vidéo successives,
une fonction d'entrée audio (62) agencée pour recevoir une séquence audio (20), la séquence audio comprenant des parties audio successives,
une fonction de condensé vidéo (63) agencée pour appliquer un algorithme de condensé aux parties vidéo de la séquence vidéo, générant ainsi des condensés vidéo,
une fonction de condensé audio (64) agencée pour appliquer un algorithme de condensé aux parties audio de la séquence audio, générant ainsi des condensés audio,
une fonction de signature (65) agencée pour générer des signatures vidéo (VS₁, VS₂) en signant numériquement des condensés vidéo et pour générer des signatures audio (AS₁, AS₂) en signant numériquement des condensés audio,
une fonction d'insertion de signature vidéo (66) agencée pour insérer des signatures vidéo dans la séquence audio,
et
une fonction d'insertion de signature audio (67) agencée pour insérer des signatures audio dans la séquence vidéo, dans lequel
la fonction de condensé vidéo (63) est agencée pour générer un premier condensé vidéo en appliquant un algorithme de condensé à une première partie vidéo de la séquence vidéo,
la fonction de condensé audio (64) est agencée pour générer un premier condensé audio en appliquant un algorithme de condensé à une première partie audio de la séquence audio,
la fonction de signature (65) est agencée pour générer une première signature vidéo (VS₁) en signant numériquement le premier condensé vidéo et pour générer une première signature audio (AS₁) en signant numériquement le premier condensé audio,
et **caractérisé en ce que** :
la fonction d'insertion de signature vidéo (66) est agencée pour insérer la première signature vidéo (VS₁) dans une première partie audio cible (41) de la séquence audio,
la fonction d'insertion de signature audio (67) est agencée pour insérer la première signature audio (AS₁) dans une première partie vidéo cible (31) de la séquence vidéo,
la fonction de condensé vidéo (63) est agencée pour générer un second condensé vidéo en appliquant un algorithme de condensé à la première partie vidéo cible comprenant la première signature audio,
la fonction de condensé audio (64) est agencée pour générer un second condensé audio en appliquant un algorithme de condensé à la première partie audio cible comprenant la première signature vidéo,
la fonction de signature est agencée pour générer une seconde signature vidéo (VS₂) en signant numériquement le second condensé vidéo et pour générer une seconde signature audio (AS₂) en signant numériquement le second condensé audio.

12. Système de signature numérique selon la revendication 11, dans lequel
la fonction d'insertion de signature vidéo est agencée pour insérer la seconde signature vidéo (VS₂) dans une seconde partie audio cible (42) de la séquence audio, et
la fonction d'insertion de signature audio est agencée pour insérer la seconde signature audio (AS₂) dans une seconde partie vidéo cible (32) de la séquence vidéo.

13. Caméra vidéo comprenant un capteur d'image (72), un microphone (74) et un système de signature numérique (60) selon l'une quelconque des revendications 11 à 12.

14. Support de stockage lisible par ordinateur comprenant des instructions qui, lorsqu'elles sont exécutées par un dispositif ayant une capacité de traitement, amènent le dispositif à mettre en œuvre le procédé selon l'une quelconque des revendications 1 à 10.
